**Europäisches Patentamt**

**European Patent Office**

**Office européen des brevets**

(11) Publication number: **0 041 855**
**A1**

(12) # EUROPEAN PATENT APPLICATION

(21) Application number: **81302525.1**

(22) Date of filing: **08.06.81**

(51) Int. Cl.³: **F 16 B 7/04**
**F 16 B 2/12, A 47 F 5/13**
**E 04 G 7/24**

(30) Priority: **10.06.80 GB 8018951**

(43) Date of publication of application:
**16.12.81 Bulletin 81/50**

(84) Designated Contracting States:
**AT BE CH DE FR GB IT LI LU NL SE**

(71) Applicant: **Cambridge Store Systems Limited**
**Industrial House Grand Arcade Tally Ho Corner**
**Finchley London N.12(GB)**

(72) Inventor: **Gillett, David Alexander**
**271 Hills Road**
**Cambridge Cambridgeshire(GB)**

(74) Representative: **Gillam, Francis Cyril et al,**
**Sanderson & Co. European Patent Attorneys 97, High**
**Street**
**Colchester, Essex, CO1 1TH(GB)**

(54) A pipe clamp and a method of making a pipe clamp.

(57) A pipe clamp suitable for use in connecting together two pipes, for instance in the erection of display stands and shopfittings. The clamp has two mating parts 18 and 19 defining a generally cylindrical body, a bolt passing through a hole 24 in one part and threadingly engaged with a corresponding hole in the other part, to allow the two parts to be clamped together. Each part defines two jaws 20 and 21, each pair of opposed jaws 20 and 21 defining pipe-receiving openings 22 and 23. Both pairs of jaws are configured to allow a pipe to be gripped therebetween when extending in a direction perpendicular to or coincident with the axis of the generally cylindrical body (A2, B2 and A1, B1 respectively).

FIG.1

EP 0 041 855 A1

Croydon Printing Company Ltd.

- 1 -

A PIPE CLAMP AND A METHOD OF MAKING A
PIPE CLAMP

This invention relates to a pipe clamp and especially - but not exclusively - to a pipe clamp intended primarily for use in assembling shop fittings and other point-of-sale equipment from pipes, as defined hereinafter. The pipe clamp with which this invention is concerned is suitable for connecting together two pipes, rods, bars or the like, the clamp having two mating parts each of which has two jaws and having means to clamp the two parts together with each jaw of one part opposed to the corresponding jaw of the other part thereby to grip pipes located between the jaws of the two parts. The invention extends to a method of making such a pipe clamp.

A well known, versatile and flexible system for constructing point-of-sale equipment and shop fittings (referred to hereinafter as 'display equipment') utilises tubes - usually of stainless steel or chromium plated steel - appropriately connected together to form supports for the goods being displayed. The tubes themselves are normally of circular cross-section, for such tubes can display great strength with relatively low weights, but it would be equally possible to employ solid rods or bars instead of hollow sections, or in conjunction with such sections. It is also possible to use tubes or solid rods or bars of sections other than circular provided that all the associated equipment is appropriately configured: for instance, square sections are sometimes used on display equipment. For simplicity in this Specification reference will hereinafter be made exclusively to "pipes" though it should be understood that this term is intended to include within its scope sections other than hollow circular tubes, such as those which have been mentioned above for use in assembling display equipment.

The various pipes used to make up display equipment have to be inter-connected by suitable means to provide a structure which is sufficiently strong for the goods to be displayed. In order to allow maximum flexibility in the usage of the equipment, there have been designed various types of clamp capable of connecting together two or sometimes three pipes, which clamps usually have two or more elements between which the pipes can be located and a screw-threaded clamping arrangement such that the elements may grip the external surfaces of the pipes to be joined together. The known types of pipe clamp commonly used in display equipment normally can accept two pipes extending at a single pre-set angle to one another, or in the case of a multi-pipe clamp, with fixed pre-set angles therebetween. For instance, the clamp may be designed to accept two pipes which are parallel, or two pipes which are extending mutually at right angles, or two pipes which extend with their axes co-incident. Thus, if a complete display system is to be built up using such pipe clamps, at least two but usually three or more distinct types of clamp must be employed and this can of course greatly increase the cost of a fully flexible display system.

Another problem with many known types of clamp is that they are not particularly aesthetically pleasing, insofar as they tend to be bulky particularly when pipes extending at right angles are to be joined. Unfortunately, the clamps are often rather prominent in display equipment and there is consequently a demand for clamps which, if anything, improve the appearance of the equipment when assembled from pipes.

It is a general object of this invention to provide a pipe clamp suitable for use for instance in the construction of a display system, which clamp can be used to connect pipes relatively disposed in more than one pre-set configuration, and which clamp may nevertheless have an aesthetically pleasing appearance.

According to this invention, a pipe clamp of the kind described above and suitable for connecting together two pipes is characterised in that each opposed pair of jaws being configured to define two pipe-receiving openings in either one of which a pipe may be gripped on operation of the clamping means, the axes of the two openings of one pair of opposed jaws extending in mutually-perpendicular directions respectively parallel to and co-incident with the corresponding directions associated with the two openings defined by the other pair of opposed jaws.

It will be appreciated that the pipe clamp of this invention is capable of accepting pipes in any one of four pre-set configurations, viz:

1. the two pipes extend in coincident directions, the pipe clamp then serving to effect a butt join therebetween;
2. the two pipes extend in parallel directions, the pipe clamp then serving to hold the two pipes together in a spaced but parallel disposition;
3. the two pipes extend in mutually perpendicular directions, the pipe clamp then serving:
   a) to effect a simple right-angle corner join between the pipes, or
   b) to effect a 'T'-join between the pipes.

Despite the considerable flexibility of the pipe clamp of this invention, as described above, the clamp can nevertheless be made to have an aesthetically pleasing external configuration. Preferably, the two parts of the clamp when mated define a generally cylindrical overall external shape and conveniently such a clamp can be made by appropriate machining of a solid bar of material of circular cross-section. The two parts are then preferably similar, and mate along an axial plane of the original bar. For such a case, the clamping means conveniently comprises a single screw-threaded bolt, received with clearance in a radially extending bore part-way between the ends of one element and engaged in a correspondingly screw-threaded bore also radially extending and disposed at a similar location in the second part, the two bores extending perpendicularly to the axial mating plane of the two parts.

For the preferred form of pipe clamp as described above, the two end portions of each part may define the two jaws of that part, and the each opening between the opposed jaws of the two parts being configured to accept a pipe extending either along a direction coincident with the major axis of the two parts when fitted together, or along a direction perpendicular to that major axis and lying in the plane of separation of the two parts. One way of making such a configuration of jaws is to bore the material forming the two parts, before the separation of the cylindrical bar into the two parts. Thus, two bores should be provided at each end of the bar so as to define two recesses each of at least part circular shape and of a diameter suitable for receiving a pipe with which the clamp is intended to be used. Then the bar can be separated to form the two parts by cutting the bar along an axial plane, and this allows a pipe of the same diameter as the bores provided between the jaws to be firmly gripped on tightening the clamping means, by virtue of the width of the cut between the two parts.

It would of course be possible to provide a clamp closely similar to the just-described preferred form but which is made of a bar of material of cross-sectional shape other than circular. For instance, hexagonal or octagonal bar may be aesthetically pleasing when used with pipes of circular section, or square section bar when square pipes are to be joined - but in the latter case, the pipe-receiving bores should be configured to correspond to the pipe sections.

The pipe clamp may be made by other processes than by boring, as described above. It would for instance when large numbers are to be produced, be commercially advantageous to manufacture the clamp by a casting process, using a zinc alloy, aluminium or an aluminium alloy. Another possibility is to manufacture the clamp by appropriate moulding of a hard plastics material.

Instead of the clamping means being a bolt threaded into one of the two parts, the two parts may be similar and each have a clearance hole for a bolt. Then, those two parts may be used with at least one further like part to form a multi-part clamp adapted to hold a like number of pipes extending parallel to one another. Such a multi-pipe clamp may have at least three similar clamp parts each of which has two jaws each defining a pipe-receiving recess, a clamping member around the periphery of which the clamp parts may be equi-spaced, and means to clamp each clamp part to the clamping member, the arrangement being such that a like number of parallel pipes as clamp parts may be received with each pipe disposed in the two adjacent recesses of two adjacent clamp parts respectively and clamped between those clamp parts and the clamping member.

It will be appreciated that in this arrangement of pipe clamp, each clamp part may be a clamp part as has been described hereinbefore, but then the recesses which may accept pipes the axes of which are coincident (i.e. for effecting a butt join) are not used, and indeed may be omitted, if the pipe clamp is only to be used in the just-described configuration. Preferably, three or four clamp parts are provided, to allow the clamping of three or four parallel pipes, and advantageously the clamping member is of circular cross-section adapted to allow the clamping of the three or four clamp parts thereto. As in the previously-described pipe clamp, the clamping means preferably comprises, for each clamp part, a bolt passing through the hole in a clamp part and threadingly engaged with a radially extending threaded hole provided in the clamping member.

This invention also provides a method of making a pipe clamp characterised as herein defined, which method utilises a starting workpiece of circular cross-section and comprises the steps of axially boring the workpiece from each of its two ends leaving a solid portion between the two bores, diametrically boring the workpiece adjacent its two ends with the axes of the bores parallel, the axial and diametric bores at each end intersecting and all four bores having the same diameter equal to that of the pipes to be clamped, diametrically boring the workpiece to provide a through-hole centrally between the ends, the axis thereof being perpendicular to the axes of the other two diametric bores, separating the workpiece into two parts by cutting along a diametric plane perpendicular to the axes of all three diametric bores, and screw-threading that portion of the through-hole in one of the parts so provided to allow a bolt passing through the portion of the through-hole in the other part to be engaged therewith.

By way of example only, the pipe clamp of this invention will now be described in greater detail, reference being made to the accompanying drawings, in which:-

Figure 1 is a general perspective view of a pipe clamp of this invention;

Figure 2 shows the pipe clamp of Figure 1 being used to connect two pipes extending parallel to one another;

Figure 3 shows the pipe clamp of Figure 1 being used to connect two pipes extending mutually at right angles.

Figure 4 shows the pipe clamp of Figure 1 being used to connect two pipes extending with their axes coincident;

Figure 5 shows an alternative configuration for a pipe clamp able to connect three parallel pipes; and

Figure 6 shows a modified form of the clamp of Figure 5, for connecting four parallel pipes.

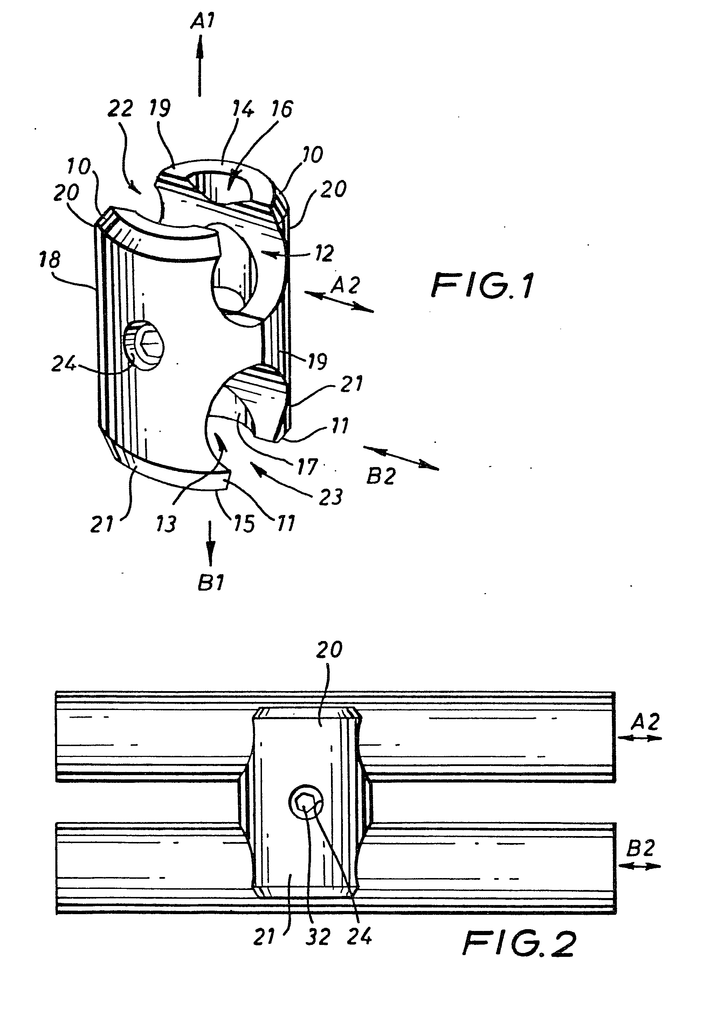

Referring initially to Figure 1, there is shown an example of pipe clamp intended for use in a display system and which is made by appropriate machining of a solid bar of aluminium or aluminium alloy of circular cross-section. The configuration of the clamp will be described by way of such a machining manufacturing process, though it will be understood that the clamp could equally well be made by other processes - for instance by casting aluminium or an alloy thereof, or casting a zinc alloy, or moulding a rigid plastics material. Such casting or moulding processes would normally be used rather than a machining process when large numbers of clamps are to be made.

Initially, when a bar of the required external diameter is to be formed by machining, bevels 10 and 11 are machined at the ends of the material, whereafter two parallel transverse bores 12 and 13 are formed in the material, sufficiently close to the ends thereof to ensure that each bore 12 and 13 breaks through the adjacent end plane 14 and 1ᶜ respectively of the bar. Each bore thus has a generally C-shaped form. Next, two further bores 16 and 17 are provided in the material, one from each end plane thereof, the two further bores extending concentric with each other and with the bar towards the centre thereof, but each bore having an axial length shorter than one half of the axial length of the bar. Finally, a counter bored diametric hole 24 is drilled through the bar perpendicular to the transverse bores 12, 13, but mid-way between the ends of the bar.

Following the provision of the transverse bores 12 and 13, the axial bores 16 and 17, and the diametric hole 24 the bar is separated along an axial plane to form two parts 18 and 19 each having two jaws 20 and 21 between which are defined pipe-receiving openings 22 and 23. The separation is performed by cutting the bar along an axial plane thereof which contains the axes of the four bores mentioned above; the hole 24 thus extending through the two parts normal to the plane of separation. That portion of the hole 24 formed in part 19 is screw-threaded, so as to be able to receive a bolt passing through the portion of hole 24 formed in part 18, whereby the two parts 18 and 19 may be clamped together on tightening the bolt. For convenience in use, the bolt preferably has a head with a hexagonal driving socket therein.

Though the clamp of this invention has been described as being machined from aluminium or any alloy thereof, it could instead be made from other materials, such as mild steel or stainless steel. If the material does not have an attractive finish by itself, the clamp preferably is suitably finished, for instance by chromium plating, plastics coating or stove enamelling.

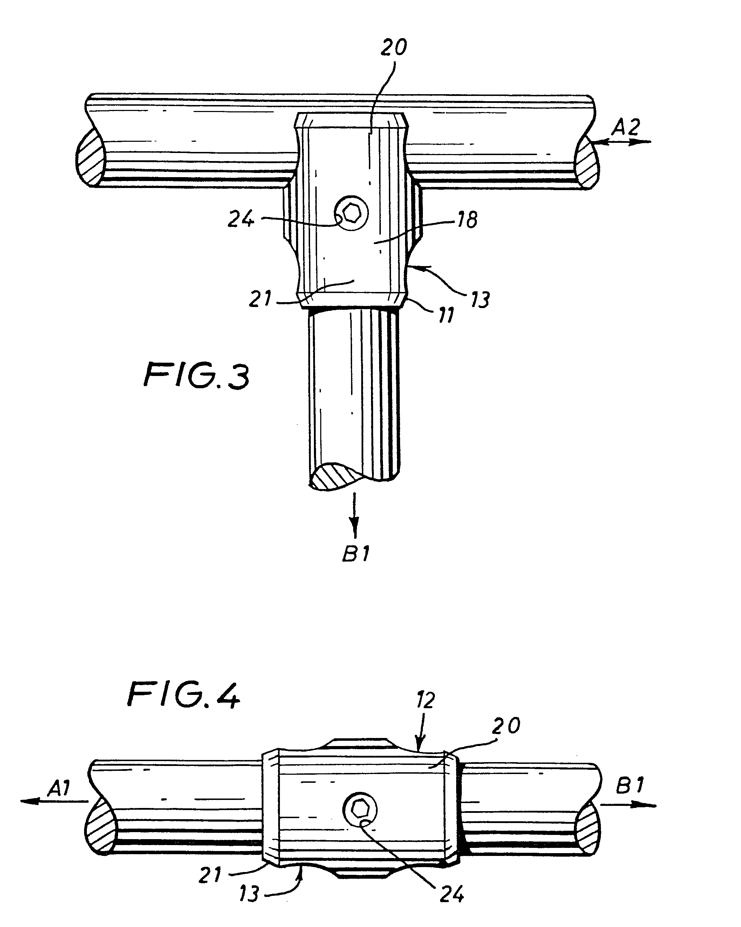

It will be appreciated that the clamp of this invention may be used to connect together two pipes, either of which may extend in one of two directions A1 and A2 (for openings 22) and B1 and B2 (for openings 23), directions A1 and B1 being substantially coincident and directions A2 and B2 being substantially parallel. Thus, when two pipes are to extend side by side but spaced from each other by a relatively small amount, they may be held together by the clamp disposed as shown in Figure 2, with the pipe axes extending along directions A2 and B2. On the other hand, if two pipes are to extend at right angles to one another, the same clamp may be used to hold together the two pipes, as shown in Figure 3 with one pipe axis extending along direction A1 and the other along direction B2. For this latter arrangement, one pipe may terminate adjacent the clamp, so as to form a simple right-angle (or corner) joint, rather than a 'T'-joint. Another possibility is shown in Figure 4, where the two pipes to be joined extend with their axes coincident: here the clamp effects a butt-joint between the pipes.

Because the bores in the clamp are formed to have the substantially same diameter as the pipes with which the clamp is to be used, the pipes are positively located by the jaws of the clamp. Moreover, because metal is removed on separating the clamp into its two mating parts 18 and 19, the effective diameter of the bores, as measured in a direction perpendicular to the axial plane of separation, can be reduced to less than the pipe diameter on tightening of the clamping bolt, and thus a powerful grip on the pipes can be obtained.

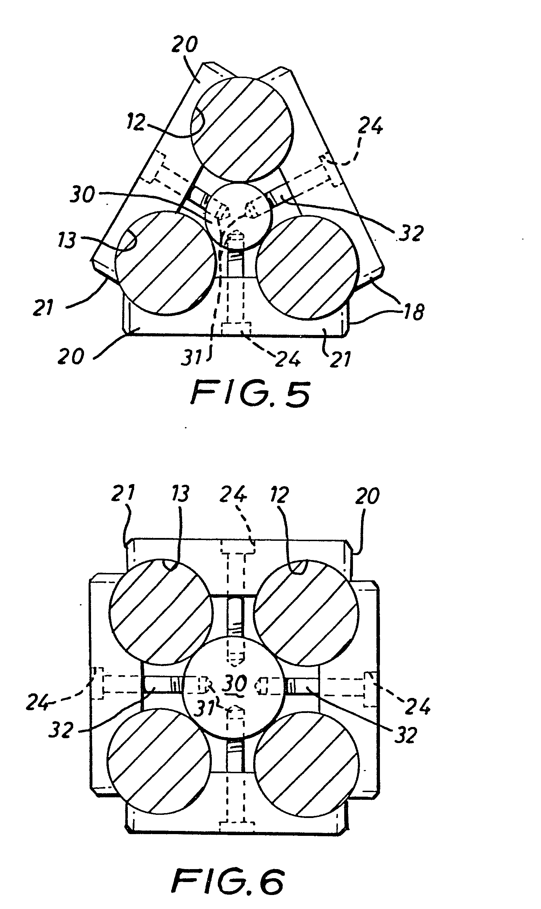

A plurality of clamp parts 18 may be used in conjunction with a clamping member, to form a different configuration of clamp adapted to hold a plurality of pipes extending parallel to one another. Two such configurations of clamp are shown in Figures 5 and 6, respectively for clamping three or four parallel pipes. In each case, the parts 18 are used with a clamping member 30 of circular cross-sectional shape and having a number of equi-spaced threaded bores 31 for receiving bolts 32 associated with the clamp parts 18. Thus, each pipe is clamped between the clamping member 30 and two adjacent pipe-receiving recesses (formed by the bores 12 and 13) of two adjacent clamp parts 18, spaced around the clamping member 30. The pipes then extend in the directions A2 and B2, for each clamp part.

It will be appreciated that the pipe clamp of this invention displays great versatility, because it can be used in a variety of ways, to enable the construction of a complete display system, especially if a clamping member such as that shown in Figures 5 and 6 is also supplied, in addition to the parts shown for example in Figure 1. Of course, when the clamp parts 18 are being used as shown in Figures 5 and 6, the bores 16 and 17 formed in the clamp parts cannot be used and the clamp may only be employed for holding parallel pipes. If the clamp is to be used only in this particular configuration, then the bores 16 and 17 could be omitted when the clamp parts are being fabricated.

- 13 -

CLAIMS.

1.    A pipe claimp suitable for connecting together
two pipes (as defined herein), which clamp has two
mating parts each of which has two jaws and means to
clamp the two parts together with each jaw of one part
opposed to the corresponding jaw of the other part
thereby to grip pipes located between the jaws of the
two parts, characterised in that each opposed pair of
jaws (20,21) being configured to define two pipe-receiving
openings (22 and 23) in either one of which a pipe may
be gripped on operation of the clamping means, the axes
of the two openings of one pair of opposed jaws (20)
extending in mutually-perpendicular directions (A1,A2)
respectively parallel to and coincident with the
corresponding directions (B1,B2) associated with the two
openings defined by the other pair of opposed jaws (21).

2.    A pipe clamp according to claim 1, characterised in
that the two parts (18,19) of the clamp when mated define
a body of generally cylindrical overall external shape.

3.    A pipe clamp according to claim 2, characterised in
that the two parts (18,19) of the clamp are similar, and
mate along an axial plane of the body of generally
cylindrical overall shape.

4.    A pipe clamp according to claim 3, characterised in
that the clamping means comprises a screw-threaded bolt
received with clearance in a radially-extending bore (24)
part-way between the ends of one part (18) and engaged
in a radially extending screw-threaded bore correspondingly
disposed in the second part (19), the two bores extending perpendicularly to the axial mating plane of the two
parts.

5. A pipe clamp according to claim 3 or claim 4,
further characterised in that the two end portions of
each part (18 and 19) define the two jaws of that part,
and each opening between the opposed jaws of the two
parts of the clamp are configured to accept a pipe
extending either along a direction coincident with the
major axis of the two parts when fitted together (A1 and
B1), or along a direction perpendicular to that major
axis and lying in the axial mating plane of the two parts
(A2 and B2).

6. A pipe clamp according to claim 5, characterised in
that each pair of opposed jaws defines a first opening
of circular cross-section the axis of which is coincident
with the axis of the generally cylindrical body defined
by the two parts and a second opening of circular cross-
section the axis of which is perpendicular to that of
the first opening.

7. A pipe clamp according to claim 1, characterised in
that there is provided at least one further part similar
to said two parts of the clamp, and in that the clamping
means comprises a clamping member (30) around which the
clamp parts may be disposed with a jaw of one part
adjacent the corresponding jaw of another part to define
a pipe-receiving opening therebetween, the clamping means
being arranged to allow each clamp part to be tightened
to the clamping member, whereby a like number of parallel
pipes as clamp parts may be received in the pipe-receiving
openings defined thereby and clamped between those clamp
parts and the clamping members.

8.    A pipe clamp according to claim 7, further characterised in that the clamping member has a like number of equi-spaced threaded bores (31) as there are clamp parts, each clamp part having a bore centrally disposed therein and through which a bolt threadingly engaged with the clamping member passes.

9.    A pipe clamp according to claim 8, characterised in that the clamping member is of circular cross-sectional shape with the threaded bores extending radially there-into.

10.   A method of making a pipe clamp according to any of claims 1 to 6 by machining a starting workpiece consisting of a length of solid bar of circular cross-section characterised in that the workpiece is bored axially from each of its two ends leaving a solid portion between the two bores, the workpiece is bored diametrically adjacent its two ends with the axes of the bores parallel, the axial and diametric bores at each end intersecting and all four bores having the same diameter equal to that of the pipes to be clamped, the workpiece is bored diametrically to provide a through-hole centrally between the ends, the axis thereof being perpendicular to the axes of the other two diametric bores, the workpiece is separated into two parts by cutting along a diametric plane perpendicular to the axes of all three diametric bores, and that portion of the through-hole in one of the parts so provided is screw-threaded to allow a bolt passing through the portion of the through-hole in the other part to be engaged therewith.

FIG.1

FIG.2

FIG.3

FIG.4

20

12

30

24

32

13

21

18

20

31 24 21

**FIG.5**

21 13 24 12 20

24

24

32

30

31

32

**FIG.6**

0041855

European Patent
Office

**EUROPEAN SEARCH REPORT**

Application number

EP 81 30 2525

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | US - A - 2 942 899 (RIFKEN)<br><br>* figures 1,2 *<br><br>-- | 1-6 | F 16 B 7/04<br>          2/12<br>A 47 F 5/13<br>E 04 G 7/24 |
| X | FR - A - 1 287 983 (SYLWAN)<br><br>* figures 1-5 *<br><br>-- | 1,3-6 | |
| A | US - A - 1 631 831 (PALMER-JONES)<br><br>------- | | |

**TECHNICAL FIELDS SEARCHED (Int. Cl.³)**

A 47 F
B 23 P
E 04 G
E 04 H
F 16 B

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 28-08-1981 | VAN DER WAL |

EPO Form 1503.1   06.78